# EUROPEAN PATENT APPLICATION

(11) **EP 3 910 583 A1**
(43) Date of publication of application: **17.11.2021**
(21) Application number: 20305474.7
(22) Date of filing: 12.05.2020
(51) Int. Cl.: G06Q 50/02, A01G 22/00, G06N 20/00, G06Q 10/04

(54) **METHOD OF CULTIVATION OF A PLOT OF LAND AND CORRESPONDING SYSTEM**

(71) Applicant: Exel Industries, 51200 Epernay (FR)
(72) Inventor: The designation of the inventor has not yet been filed
(74) Representative: Lavoix

(57) **Abstract**

This method of cultivation of two agricultural plots of land comprises the steps:
- determining for the agricultural plots of land a field passability (P) over a period of time (T) at least partially in the future,
- determining for the plots of land a supplementary cultivation parameter over the period of time (T)

- determining, based on the field passability (P) and the supplementary cultivation parameter (A - F), a combined forecast of farming conditions (FC) for the plots of land over the period of time,
- based on the combined forecast of farming conditions, selecting a plot of land, selecting a cultivation operation, and executing the selected cultivation operation on the selected plot of land.

The supplementary cultivation parameter is selected out of: Tread characteristics (A), Fuel consumption (B), Machine characteristics (C), Soil & Yield characteristics (D), Efficiency and / or Quality of Cultivation (E), and Cost (F).

## Description

The present invention concerns a method of cultivation of a plot of land.

Methods of cultivating plots of land are known. Methods and systems for farming are for example disclosed in EP3046066, WO2016134341 and WO201849289.

However, today's farmers are under an ever increasing constraint of increasing the efficiency of farming.

It is an object of the invention to further improve the overall efficiency of farming operation of plots of land in order to render the farming operation more economic.

In order to achieve at least one of the above objects, the invention relates to a method as defined by claim 1.

According to specific embodiments, the method according to the invention can comprise one or more of the following features, taken alone or together in all technically possible combinations:
- the step of determining the field passability comprises one or more of:
   - determining an amount or quote-part of agricultural operations executed or scheduled to be executed and corresponding to an external field passability, which is the field passability of at least one plot of land different from the first and second plots of land,
   - providing a field passability artificial intelligence model, providing the field passability artificial intelligence model with parameter data relating to the first and the second agricultural plot of land, providing the field passability artificial intelligence model with forecast data relating to the first and second agricultural plot of land over the predetermined period of time;
- the step of determining the field passability comprises the step of training the field passability artificial intelligence model with data, in particular actual data, relating to the field passability of a given plot of land;
- the step of determining of one or more supplementary cultivation parameters over the predetermined period of time comprises determining tread characteristics (A:) (tractive forces and/or wheel spin), of a machine to be used for the cultivation, wherein
   determining tread characteristics of a machine to be used for the cultivation comprises :
   - determining the machine to be used for the cultivation,
   - determining tread characteristics (A), in particular tractive forces and/or wheel spin, based on the machine to be used for the cultivation;
   the step of determining tread characteristics comprises providing a tread characteristics artificial intelligence model, providing the tread characteristics artificial intelligence model with parameter data relating to the first and the second agricultural plot of land, providing the tread characteristics artificial intelligence model with forecast data relating to the first and second agricultural plot of land over the predetermined period of time and providing the tread characteristics artificial intelligence model with parameter data on the machine to be used for the cultivation;
- the step of determining the tread characteristics comprises the step of training the tread characteristics artificial intelligence model with data, in particular actual data, relating to the tread characteristics of a given plot of land and a given machine used for cultivating the given plot of land;
- wherein the step of determining of one or more supplementary cultivation parameters over the predetermined period of time comprises determining fuel consumption (B) of the machine to be used for the cultivation, wherein
   the step of determining fuel consumption comprises providing a fuel consumption artificial intelligence model, providing the fuel consumption artificial intelligence model with parameter data relating to the first and the second agricultural plot of land, providing the fuel consumption artificial intelligence model with forecast data relating to the first and second agricultural plot of land over the predetermined period of time and providing the fuel consumption artificial intelligence model with data on the machine to be used for the cultivation;
- the step of determining the fuel consumption comprises the step of training the fuel consumption artificial intelligence model with data, in particular actual data, relating to the fuel consumption of a given machine for cultivation of a given plot of land and a given machine used for cultivating the given plot of land;
- the step of determining one or more supplementary cultivation parameters over the predetermined period of time comprises determining machine characteristics (C:) of the machine to be used for the cultivation, wherein
   determining the machine characteristics comprises :
   - determining the machine to be used for the cultivation,
   - determining the machine characteristics, in particular mechanical wear and/or downtime and/or component failures, of the machine to be used for the cultivation;
- the step of determining machine characteristics comprises providing a machine characteristics artificial intelligence model, providing the machine characteristics artificial intelligence model with parameter data relating to the first and the second agricultural plot of land, providing the machine characteristics artificial intelligence model with forecast data relating to the first and second agricultural plot of land over the predetermined period of time and providing the machine characteristics artificial intelligence model with data on the machine to be used for the cultivation;
- the step of determining the machine characteristics comprises the step of training the machine characteristics artificial intelligence model with data, in particular actual data, relating to the machine characteristics of a given plot of land and a given machine used for cultivating the given plot of land;
- the step of determining one or more supplementary cultivation parameters over the predetermined period of time comprises determining Soil & Yield characteristics (D), including soil compaction and /or yield effects, of the respective agricultural plot of land, wherein
   determining the Soil & Yield characteristics comprises one of the following:
   - providing a Soil & Yield characteristics artificial intelligence model, providing the Soil & Yield artificial intelligence model with parameter data relating to the first and the second agricultural plot of land, providing the Soil & Yield characteristics artificial intelligence model with forecast data relating to the first and second agricultural plot of land over the predetermined period of time and providing the Soil & Yield characteristics artificial intelligence model with parameter data on the machine to be used for the cultivation,
   - providing a Soil & Yield characteristics agronomical model, providing the Soil & Yield agronomical model with parameter data relating to the first and the second agricultural plot of land, providing the Soil & Yield characteristics agronomical model with forecast data relating to the first and second agricultural plot of land over the predetermined period of time and providing the Soil & Yield characteristics agronomical model with parameter data on the machine to be used for the cultivation;
- the step of determining the Soil & Yield characteristics comprises the step of training the Soil & Yield characteristics artificial intelligence model with data, in particular actual data, relating to the Soil & Yield characteristics of a given plot of land and a given machine used for cultivating the given plot of land;
   the step of determining one or more supplementary cultivation parameters over the predetermined period of time comprises determining Performance of Cultivation characteristics (E), in particular Efficiency and/or Quality of Cultivation, of the respective agricultural plot of land, wherein
   determining the Performance of Cultivation characteristics comprises one of the following:
   - providing a Performance of Cultivation characteristics artificial intelligence model, providing the Performance of Cultivation characteristics intelligence model with parameter data relating to the first and the second agricultural plot of land, providing the Performance of Cultivation characteristics artificial intelligence model with forecast data relating to the first and second agricultural plot of land over the predetermined period of time and in particular providing the Performance of Cultivation characteristics artificial intelligence model with data on the machine to be used for the cultivation;
   - providing a Performance of Cultivation characteristics agronomical model, providing the Performance of Cultivation characteristics agronomical model with parameter data relating to the first and the second agricultural plot of land, providing the Performance of Cultivation characteristics agronomical model with forecast data relating to the first and second agricultural plot of land over the predetermined period of time and in particular providing the Performance of Cultivation characteristics agronomical model with data on the machine to be used for the cultivation;
- the step of determining the Performance of Cultivation characteristics comprises the step of training the Performance of Cultivation characteristics artificial intelligence model with data, in particular actual data, relating to the performance of cultivation characteristics of a given plot of land and a given machine used for cultivating the given plot of land.
- the step of determining one or more supplementary cultivation parameters over the predetermined period of time comprises determining the cost of cultivation (F) of the respective agricultural plot of land.

Another object of the invention is a system of cultivation of at least a first and a second agricultural plot of land, comprising:
a computing environment including at least one computer-readable storage medium having program instructions stored therein, and
a computer processor operable to execute the program instructions of determining according to one of the above methods, and
a machine adapted to execute the selected cultivation operation on the selected plot of land.

It is contemplated that the various features set forth in the preceding paragraphs, in the claims and/or in the following description and drawings may be taken independently or in any combination thereof. For example, features disclosed in connection with one embodiment are applicable to all embodiments, except where there is technical incompatibility of features.

Furthermore, the statements contained in the description relate to particular embodiments and are not to be construed as limitations on the scope of the invention or on the definition of terms used in the claims, except where a term or phrase is expressly defined. Various other embodiments and various changes and modifications to the disclosed embodiment(s) will become apparent to those skilled in the art. All such other embodiments, changes, and modifications are intended to come within the scope of the appended claims.

Also, where a group of features is disclosed, this disclosed group should also be considered as disclosing any sub-group that is technically possible.

As used in this specification and claims, the terms "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation.

Also, each functional feature of a disclosed device or system, as disclosed for example by "adapted to" or "for", should be understood as disclosing the corresponding method step during use of the device or system.

The invention will be better understood in light of the following specification, which refers to the annexed figures which show:
- Figure 1 a schematic view of a system according to the invention for executing the method of cultivation of plots of land;
- Figure 2 is a flow-chart showing steps of a method of cultivation for implementing the instant invention; and
- Figure 3 is a more detailed view of a portion of the system of Figure 1.

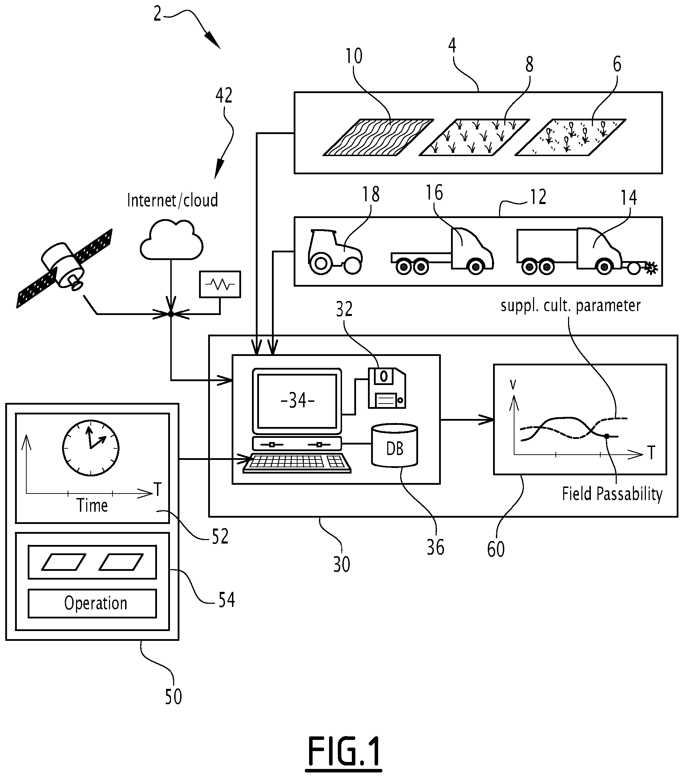

Figure 1 shows schematically a system used for executing the method according to the invention.

The system is designated by the general reference 2. The system 2 comprises a plurality of agricultural plots of lands 4, such as a first agricultural plot of land 6, a second agricultural plot of land 8 and a supplementary agricultural plot of land 10. Each of the first, second and supplementary agricultural plots of land may correspond to a complete individual agricultural field, a plurality of agricultural fields, adjacent or not, or any portion or sub portion of an agricultural field or plurality of agricultural fields.

In the following the term "farmer" will be used for the person operating the system 2 and is synonymous with "operator". However, the term is used broadly and the farmer may be the proprietor or not of the system and/ or of any of the plurality of the plots of land. The farmer may or may not be the person executing the steps of farming or it may be a third person. The person executing the steps may be a contractor or contributor.

The system 2 is adapted for cultivating at least the first and the second agricultural plots of land 4 and 6. The system 2 may also comprise only the first and second agricultural plot of land, the supplementary plot of land 10 being omitted or the system 2 only comprising information about the supplementary plot of land. This is for example the case when the system 2 uses information about a supplementary plot of land that does not belong to the farmer to whom the first and second plots of land belong and who wishes to work on either the first 6 or second 8 plot of land.

The system 2 comprises also a plurality of agricultural machines 12, such as a first machine 14, a second machine 16 and a third machine 18. As a variant, the system comprises one agricultural machine only.

Each of the first machine 14, the second machine 16 and the third machine 18 are any type of machine used for agricultural cultivation of the plots of land 6, 8. The machines may be selected out of the group consisting of:
- a soil preparation machine, such as a plow, a (disc) harrow, or cultivator
- a seeding machine, such as a seed drill,
- a machine for distributing active agents, e.g., fertilizer, herbicides or pesticides, such as a spray machine,
- a harvesting machine, such as a combine harvester, a beet root uprooting machine, or a haying machine,
- a transport machine, e.g. for transporting harvested crop, such as a truck
- a pick-up, cleaning and transfer machine, adapted for picking up crop, cleaning the crop and transferring the crop to a transport vehicle, such as a beet cleaner loader.

The machines may also be a tractor with a corresponding tool attached to it.

Each of the first machine 14, the second machine 16 and the third machine 18 may be owned by the farmer wishing to use the method according to the invention or may be owned by a third party, such as an association for the use of commonly owned machines. The owner may also be a contractor or contributor.

Each of the machines is adapted to execute a cultivation step on the first 6 and second 8 plots of land.

The system 2 comprises a computing environment 30.

The computing environment 30 comprises at least one computer-readable storage medium 32 having program instructions stored therein, and
a computer processor 34 operable to execute the program instructions. The program instructions are able to perform some, any or all of the method steps disclosed in the context of the present invention. The computer processor may be a Central Processing unit (CPU) a Graphics processor Unit (GPU), or a micro-controller.

The computing environment 30 comprises also database means 36 in which original data is stored that is processed during execution of the method according to the invention. The database means 36 may also be adapted to receive and store result data obtained by the method according to the invention. The database means comprise any collection of data in a structural manner that is adapted to store and retrieve the data of the method according to the invention. The database means may be a text file.

The computing environment 30 is connected to a data source 42. The data source provides any of the data that is used or needed for executing the method according to the invention.

The data source 42 comprises for example external databases relating to current or historical or future estimated data and can be for example what is commonly referred to as the "cloud", i.e. data storage means containing the respective data distributed over the internet. The data source 42 may also comprise any sensor means necessary to obtain data, such as sensors relating to the machines, e.g. positioning sensors or machine condition sensors, sensors relating to the plots of lands 6, 8, 10, such as local temperature or humidity sensors, sensors relating to the vegetation on the plots of land such as growth height sensors, etc..

More particularly, the data obtained by the data source 42 and/or stored in the database means 36 may comprise some, any or all of:
- previous, current and future weather conditions relating to the first agricultural plot of land 6, the second agricultural plot of land 8 and/or the supplementary agricultural plot of land 10;
- topography data for relating to the first agricultural plot of land 6, the second agricultural plot of land 8 and/or the supplementary agricultural plot of land 10;
- the current type and/or previous types or estimated previous types of crop cultivated on the first agricultural plot of land 6, the second agricultural plot of land 8 and/or the supplementary agricultural plot of land 10;
- the type of tool or device (e.g. plow, disc harrow, cultivator, seeder, etc.) and/or working data (e.g. working speed, working settings, machine data, vehicle lanes, operation lanes) of previous agricultural operations or estimated data of previous operations on the first agricultural plot of land 6, the second agricultural plot of land 8 and/or the supplementary agricultural plot of land 10;
- the type of operation (e.g. Plowing, (disc) harrowing, cultivating, seeding, sugar beet harvesting, haying, etc.) to be executed on the first agricultural plot of land 6 and/or the second agricultural plot of land 8,
- soil data of the first agricultural plot of land 6, the second agricultural plot of land 8 and/or the supplementary agricultural plot of land 10 (e.g. obtained by ISRIC),
- previous, current and future soil conditions of the first agricultural plot of land 6, the second agricultural plot of land 8 and/or the supplementary agricultural plot of land 10 (e.g. soil moisture content, soil moisture index, soil water index, soil temperature on the surface and in predetermined depths , evaporation, frost or danger of frost),
- used chemical agents on the first agricultural plot of land 6, the second agricultural plot of land 8 and/or the supplementary agricultural plot of land 10 additives or their chemical composition (e.g. fertilizer, crop protection products such as fungicide or herbicide, manure slurry),
- machine position and GNSS Data (e.g. vehicle lanes) or estimated GNSS Data
- raw machine data of each of or some of the plurality of agricultural machines 12 (e.g. power of the machine during operation, operational speed, working depth, extrapolated data, machine settings, or estimated machine settings, tractive forces, wheel-spin) or mathematical transformed data based on this raw machine data,
- machine configuration (e.g. type of tires) or estimated machine configuration of each of or some of the plurality of agricultural machines 12,
- general machine data (e.g. machine weight, dynamic load during operation, tire pressure etc, number of axles) or estimated general machine data,
- machine settings (i.e. parameter settings of the machine) of the operator or estimated machine settings by the operator and/or all the operators in a determined geographic area around the first agricultural plot of land 6 and/or the second agricultural plot of land 8 and/or the supplementary agricultural plot of land 10;
- machine usage (i.e. driving behavior) by an operator or estimated machine usage by the operator and/or all the operators in a determined geographic area around the first agricultural plot of land 6 and/or the second agricultural plot of land 8 and/or the supplementary agricultural plot of land 10,
- satellite imagery data of the first agricultural plot of land 6 and/or the second agricultural plot of land 8 and/or the supplementary agricultural plot of land 10.

The data may in a general manner be historical data, up to date data, predicted or estimated data. Each of the above data can also be used for predicting data of a type different from the data used for the prediction. E.g. The engine load may be predicted based on topography data and weather conditions, which are data types different from engine load.

The above-mentioned machine configuration comprises or consists of adjustable parameters (e.g. scalper height, digging depth, and working speed) of a given machine. General machine data comprise or consist of non-adjustable parameters (e.g. machine weight, number of axles, etc.) of a given machine. The number of axles or the tire pressure may also be a machine configuration parameter, depending on whether it is changeable or not.

The data source 42 may also comprise one or more of data, such as image data, taken by a drone currently operating over the plot of land or pictures of the plot of land.

The computing environment 30 has also input means 50 allowing for an operator or farmer to input data or parameters in the computing environment 30. The input means 50 may also be omitted, depending on the source of data and parameters.

The input means 50 allow, by schedule time period input means 52, in particular the input or selection of a predetermined period of time T, called in the following "schedule time period". The schedule time period corresponds to a period of time in which the operator would like to execute one or more of a plurality of cultivation operations on one or more of the first agricultural plot of land 6 and/or the second agricultural plot of land 8. The schedule time period is for example a week, two weeks, three weeks or a month. The schedule time period may also be predicted by the algorithm instead of being input by the operator.

The schedule time period T is at least situated partially in the future, and in particular situated completely in the future. The beginning of the schedule time period is advantageously situated in the near future, i.e. within a week from the current time the operator executes the method.

The input means 50 may also, by selection means 54, allow selecting or choosing a subgroup of cultivation operations out of a group having a plurality of cultivation operations that are theoretically possible for the first agricultural plot of land 6 and/or the second agricultural plot of land 8. The subgroup of cultivation operations are for example chosen by the availability of machines, the availability of operators, the type of crop on the plot of lands 6, 8, etc.

The computing environment 30 comprises means for determining cultivation parameters 60, adapted to determine at least two cultivation parameters over the whole schedule time period, i.e. a relative or absolute indicator of these cultivation parameters. The relative or absolute indicator of each of these cultivation parameters may be a succession of values, lengths, colors, color intensities or any other representation, including graphical, indicator allowing comparison of the different conditions of the cultivation parameter over time, e.g. over the whole schedule time period or over a part of schedule time period.

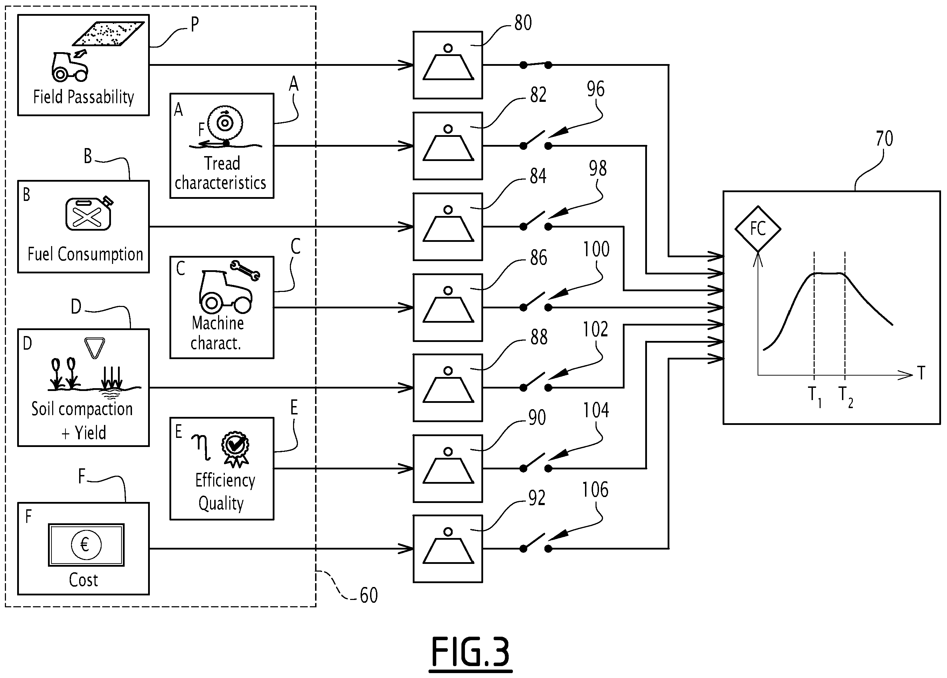

The computing environment 30 comprises also means for determining a farming condition forecast 70 adapted to determine a combined forecast of farming condition for the first agricultural plot of land 6 and/or the second agricultural plot of land 8 over the predetermined period of time or at least for the portion of the predetermined period of time situated in the future or for a part of the predetermined period of time, and this based on the cultivation parameters determined by the means for determining cultivation parameters 60 over the whole schedule time period. These means 70 are schematically depicted in Figure 3.

Further, based on the combined forecast of farming conditions, the computing environment 30 may determine a suggested plot of land to be selected by the operator, which is one of the first and second agricultural plots of land to be cultivated, and/or determine a suggested cultivation operation to be selected by the operator, which is one of a plurality of cultivation operations, for the selected plot of land, and/or determine a suggested timeslot for the suggested plot of land and the suggested cultivation operation, or a selected cultivation operation, the suggested timeslot being situated within the schedule time period. The cultivation operation to be selected by the operator may also comprise a suggested number of repetitions during a period of time, e.g. morning and evening. The suggested timeslot may also be selected by an algorithm and not by the operator (i.e. estimated time slot for mowing, yesterday the plot of land was mowed, so in 4 weeks will be next time).

The at least two cultivation parameters comprise at least the field passability P, and one or more of the following supplementary cultivation parameters:
A: Tread characteristics, including tractive forces and/or wheel spin, of a machine to be used for the cultivation,
B: Fuel consumption of the machine to be used for the cultivation,
C: Machine characteristics, including mechanical wear and/or downtime and/or component failures, of the machine to be used for the cultivation,
D: Soil & Yield characteristics, including soil compaction and /or yield effects, of the respective agricultural lot of land,
E: Efficiency and / or Quality of Cultivation,
F: Cost.

The cultivation parameters may also only comprise one of the parameters A to F above and not the field passability (P). In this case, the operator checks himself whether the field is passable.

The definition of the cultivation parameters and their individual determination may be as follows:
P: Field Passability

The definition of field passability is the capacity of the field to bear a certain machine or operation without adversely affecting the soil condition, e.g. increasing soil compaction.

A possible indicator of field passability / or soil workability is the number or part of operators working on plots of agricultural land having similar features and similar conditions with the same operation.

Predictions of field passability may be based on one or more artificial intelligence model(s) or based on one or more statistical model(s). An indicator of field passability may therefore be a function of a likelihood of operation. Also the prediction of field passability may include further data, comprising one or more selected from the group of soil moisture, soil type, soil pH-value, or other soil data and weather data. Prediction of field passability indicates whether machines are operated in the field under certain conditions or not. In other terms, it is detected how many operators of a given operator group go in to the field under defined circumstances and how many of them do not go to the field. This is represented by a statistical value.

As indicated in Figure 3, field passability P is determined by the computing environment 30. The computing environment 30 comprises a weighing function 80 allowing for the operator or the computing environment to adjust the relative importance of the field passability with respect to the remaining cultivation parameters A to F, by determining a weighed field passability.

The weighing function 80 could be implemented using a Pareto optimization Alternatively, the implementation may be any other mathematical, multi-objective or multi-modal optimization (such as Optimization algorithms, iterative methods, global convergence, heuristics).

The weighing function 80 may take into account the urgency or absence of urgency of the agricultural operation to be accomplished. E.g. depending on whether there will be rain, is it the end or the start of the slurry season, etc. the weighing function may be 1, i.e. the weighed field passability is the same as the field passability input into the weighing function. Generally, the weighing function 80 is different from 1, i.e. the weighed field passability is different from the field passability input in the weighing function 80. For the sake of description, unless necessary, there is no distinction made between the determined field passability and the weighed field passability.

Field passability may also be dependent on the envisaged operation under otherwise identical conditions (plot of land, temperature, humidity, precipitation), e.g. field passability of a pesticide spraying operation may be different from field passability of a fertilizer spraying operation.

The prediction or forecast of the field passability may be generated using one or more artificial intelligence models. The artificial intelligence models may be one or more of the below defined models.

Indicators of field passability may be values which can be predicted or forecast are the absolute or relative or categorical field passability or an absolute or relative or categorical field passability index in comparison to the statistical absolute or relative or categorical field passability of the machine or more machines.

In this context, the forecast data relating to the first and second agricultural plot of land may comprise rain forecast data, temperature forecast data, or any or all of the data obtained by the data source 42 and/or stored in the database means 36 as defined above.

A categorical field passability indicates the field passability in discrete values which comprise or consist of 3 to 5 values, for example: 1-bad; 5-average; 10-good.

The artificial intelligence model(s) for determining the field passability may be before the determination of the field passability trained with the above data (i.e. the data obtained by the data source 42 and/or stored in the database means 36).

The data for training this artificial intelligence model(s) may stem from the first agricultural plot of land 6 and/or the second agricultural plot of land 8 and/or the supplementary agricultural plot of land 10, or the particular area (e.g. any other plot of land that has similar properties and is not worked by this machine) or the machine(s) or implement(s).

In order to improve the prediction or forecast between different machines and or different equipments, pre-trained artificial intelligence model(s) may be used. The different machines are two different individual machines, but of the same type (e.g. two beet harvesters) or two machines of different types (e.g. one plow and one beet root harvester).

Figure 3 shows schematically that the determined field passability P generated by means 60, and which may be weighed or not by the weighing function 80, is input in the means for determining a farming condition forecast 70.

### A: Tractive forces

The definition of tractive forces is the force to be generated by the machine to move forward or accelerate during the cultivation operation at a determined velocity. Wheel-spin is defined as a relative motion of the tread surface of a tire with respect to the surface with which the tire is in contact. This occurs due to the force delivered to the tire tread exceeding the tread-to-surface friction.

The tractive forces and wheel-spin may be determined based on a working depth of an implement of the machine, e.g. plow, cultivator, lifting unit.

Tractive forces and wheel-spin may be determined based on additional data which can include mechanical wear of the tire, of an axle, of a plow, a harvesting unit or any other implement.

As indicated in Figure 3, tractive forces and wheel-spin A is determined by the computing environment 30. The computing environment 30 comprises a weighing function 82 allowing for the operator or the computing environment to adjust the relative importance of the tractive forces and wheel-spin with respect to the remaining cultivation parameters, by determining a weighed tractive forces and wheel-spin. The weighing function 82 may take into account the importance of having a good grip of the tires on the surface, e.g. when operation on a slope or in moist conditions, or the absence in case of dry conditions on horizontal soil.

The weighing function 82 could be implemented using a Pareto optimization Alternatively, the implementation may be any other mathematical, multi-objective or multi-modal optimization (such as Optimization algorithms, iterative methods, global convergence, heuristics).

The weighing function 82 may be 1, i.e. the weighed tractive forces and wheel-spin is the same as the tractive forces and wheel-spin input into the weighing function 82. Generally, the weighing function 82 is different from 1, i.e. the weighed tractive forces and wheel-spin is different from the tractive forces and wheel-spin input in the weighing function 82. For the sake of description, unless necessary, there is no distinction made between the determined tractive forces and wheel-spin and the weighed tractive forces and wheel-spin.

Predictions of tractive forces and wheel-spin may be based on one or more artificial intelligence model(s) or based on one or more statistical model(s).

Indicators of tractive forces and wheel-spin may be values which can be predicted or forecast and may be the absolute or relative or categorical tractive forces and the absolute or relative or categorical wheel-spin, a tractive forces index (absolute or relative or categorical) and a wheel-spin index (absolute or relative or categorical) in comparison to the statistical tractive forces / wheel-spin (absolute or relative or categorical) of the machine or more machines.

In this context, the forecast data relating to the first and second agricultural plot of land may comprise rain forecast data, temperature forecast data, or any or all of the data obtained by the data source 42 and/or stored in the database means 36 as defined above.

The artificial intelligence model(s) for determining the tractive forces and wheel-spin may be before the determination of the tractive forces and wheel-spin trained with the above data (i.e. the data obtained by the data source 42 and/or stored in the database means 36).

The data for training this artificial intelligence model(s) may stem from the first agricultural plot of land 6 and/or the second agricultural plot of land 8 and/or the supplementary agricultural plot of land 10, or the particular area (e.g. any other plot of land that has similar properties and is not worked by this machine or the machine(s) or implement(s).

In order to improve the prediction or forecast between different machines and or different equipments, pre-trained artificial intelligence model(s) may be used. The different machines are two different individual machines, but of the same type (e.g. two beet harvesters) or two machines of different types (e.g. one plow and one beet root harvester).

Figure 3 shows schematically that the determined tractive forces and wheel-spin generated by means 60, and which may be weighed or not by the weighing function 82, is input in the means for determining a farming condition forecast 70.

### B: Fuel Consumption

The definition of fuel consumption is the consumption of the machine to be used for a given cultivation operation under determined conditions.

Fuel consumption may be determined based on additional data which can include mechanical wear of parts of the machine, in particular the tires, and/or tractive forces as determined above or determined by other means. The additional data may also include parameters relating to soil conditions, weather conditions and wear of implements. The data or additional data may comprise historical data of the machine, of the machine type or predicted data of the machine or predicted data of the machine type.

As indicated in Figure 3, fuel consumption B is determined by the computing environment 30. The computing environment 30 comprises a weighing function 84 allowing for the operator or the computing environment to adjust the relative importance of the fuel consumption with respect to the remaining cultivation parameters, by determining a weighed fuel consumption. The weighing function 84 may take into account the importance of fuel consumption, e.g. whether the fuel consumption is primordial, for example when fuel is scarce or whether fuel consumption is of little importance, for example when the time for finishing the cultivation operation is primordial due to imminent deadlines. The weighing function 84 could be implemented using a Pareto Alternatively, the implementation may be any other mathematical, multi-objective or multi-modal optimization (such as Optimization algorithms, iterative methods, global convergence, heuristics).

The weighing function may be 1, i.e. the weighed fuel consumption is the same as the fuel consumption input into the weighing function 84. Generally, the weighing function 84 is different from 1, i.e. the weighed fuel consumption is different from the fuel consumption input in the weighing function. For the sake of description, unless necessary, there is no distinction made between the determined fuel consumption and the weighed fuel consumption.

Predictions or forecast of fuel consumption may be based on one or more artificial intelligence model(s), which may be one of the models defined below.

Indicators of fuel consumption which can be predicted or forecast may be absolute or relative or categorical fuel consumption (e.g. in litres, etc.) or absolute or relative or categorical fuel consumption per area or a fuel consumption index (absolute or relative or categorical) in comparison to the statistical fuel consumption (absolute or relative or categorical) of the machine or more machines.

In this context, the forecast data relating to the first and second agricultural plot of land may comprise rain forecast data, temperature forecast data, or any or all of the data obtained by the data source 42 and/or stored in the database means 36 as defined above.

The artificial intelligence model(s) for determining the fuel consumption may be, before determination of the fuel consumption, trained with the above data (i.e. the data obtained by the data source 42 and/or stored in the database means 36).

The data for training this artificial intelligence model(s) may stem from the first agricultural plot of land 6 and/or the second agricultural plot of land 8 and/or the supplementary agricultural plot of land 10, or the particular area (e.g. any other plot of land that has similar properties and is not worked by this machine) or the machine(s) or implement(s).

In order to improve the prediction or forecast of the fuel consumption between different machines and or different equipment, pre-trained artificial intelligence model(s) may be used. The different machines are two different individual machines, but of the same type (e.g. two beet harvesters) or two machines of different types (e.g. one plow and one beet root harvester).

Figure 3 shows schematically that the determined fuel consumption generated by means 60, and which may be weighed or not by the weighing function 84, is input in the means for determining a farming condition forecast 70.

### C: Machine characteristics

The definition of machine characteristics is a property of the machine to be used for a given cultivation operation under determined conditions. The machine characteristics can be a current machine characteristics, at the time of evaluation, and/or an estimated machine characteristics at the time of the given cultivation operation.

The property of the machine may include mechanical wear and/or downtime of the machine and/or component failures and may comprise historical data of the machine, of the machine type or predicted data of the machine or predicted data of the machine type. The property of the machine may also include predicted wear or predicted downtime as a function of a given plot of land.

As indicated in Figure 3, machine characteristics C are determined by the computing environment 30. The computing environment 30 comprises a weighing function 86 allowing for the operator or the computing environment to adjust the relative importance of the machine characteristics with respect to the remaining cultivation parameters, by determining weighed machine characteristics. The weighing function 86 may take into account the importance and likelihood of a possible component failure, and/or the wear condition of a machine component. The weighing function 86 could be implemented using a Pareto optimization. Alternatively, the implementation may be any other mathematical, multi-objective or multi-modal optimization (such as Optimization algorithms, iterative methods, global convergence, heuristics).

The weighing function 86 may be 1, i.e. the weighed machine characteristics is the same as the machine characteristics input into the weighing function 86. Generally, the weighing function 86 is different from 1, i.e. the weighed machine characteristics is different from the machine characteristics input in the weighing function 86. For the sake of description, unless necessary, there is no distinction made between the determined machine characteristics and the weighed machine characteristics.

Additional data which may be used for the machine characteristics estimation or forecast comprise:
- At least some of the machines of a manufacturer's fleet or between the fleets of different manufacturers are equipped with additional sensors to monitor directly or indirectly mechanical wear. These sensors may for example monitor material thickness, natural frequency (in German: Eigenfrequenz) and/or normal modes, elastic deformation, etc. Not each component with mechanical wear has to, but may be equipped with one of these sensors. If some components in a manufacturer's fleet or between the fleets of different manufacturers have a similar shape, it may be sufficient to equip only some of the components with these sensors;
- Machine down time;
- Data relating to sold spare parts of the type of machine may improve the above predictions or forecast.

Predictions or forecast of machine characteristics may be based on one or more artificial intelligence model(s).

Indicators of machine characteristics which can be predicted or forecast may be absolute or relative or categorical mechanical wear (e.g. thickness of a part in mm, in percent, etc.) or mechanical absolute or relative or categorical wear per area or a mechanical wear index (absolute or relative or categorical), in comparison to the statistical wear (absolute or relative or categorical) of the machine or more machines..

Indicators of machine characteristics which may additionally be predicted or forecast are absolute or relative or categorical downtime (e.g. in minutes, etc.) or absolute or relative or categorical downtime per area or a downtime index (absolute or relative or categorical) in comparison to statistical downtime (absolute or relative or categorical) of the machine or more machines.

Finally, component failures may be predicted or forecast, and may comprise historical data of the machine, of the machine type or predicted data of the machine or predicted data of the machine type.

In this context, the forecast data relating to the first and second agricultural plot of land may comprise rain forecast data, temperature forecast data, or any or all of the data obtained by the data source 42 and/or stored in the database means 36 as defined above.

The artificial intelligence model(s) for determining the machine characteristics may be before the determination of the machine characteristics trained with the above data (i.e. the data obtained by the data source 42 and/or stored in the database means 36). The data for training this artificial intelligence model(s) may stem from the first agricultural plot of land 6 and/or the second agricultural plot of land 8 and/or the supplementary agricultural plot of land 10, or the particular area (e.g. any other plot of land that has similar properties and is not worked by this machine) or the machine(s) or implement(s).

In order to improve the prediction or forecast of machine characteristics between different machines and or different equipments, pre-trained artificial intelligence model(s) may be used. The different machines are two different individual machines, but of the same type (e.g. two beet harvesters) or two machines of different types (e.g. one plow and one beet root harvester).

Figure 3 shows schematically that the determined machine characteristics generated by means 60, and which may be weighed or not by the weighing function 86, is input in the means for determining a farming condition forecast 70.

### D: soil compaction and yield effects

Soil compaction is the increase in bulk density or decrease in porosity of a given soil under the influence of a given cultivation operation.

Yield effect is the influence on the overall obtained crop quantity respecting a determined quality level in relation to the overall used resources for obtaining this crop quantity.

As indicated in Figure 3, soil compaction and yield effects are determined by the computing environment 30. The computing environment 30 comprises a weighing function 88 allowing for the operator or the computing environment to adjust the relative importance of the soil compaction and yield effect with respect to the remaining cultivation parameters, by determining weighed soil compaction and yield effect. The weighing function 88 may take into account the machine weight and tread and/or the importance of maintaining a current soil density. The weighing function 88 could be implemented using a Pareto optimization Alternatively, the implementation may be any other mathematical, multi-objective or multi-modal optimization (such as Optimization algorithms, iterative methods, global convergence, heuristics).

The weighing function 88 may be 1, i.e. the weighed soil compaction and yield effect is the same as the soil compaction and yield effect input into the weighing function 88. Generally, the weighing function 88 is different from 1, i.e. the weighed soil compaction and yield effect is different from the soil compaction and yield effect input in the weighing function 88. For the sake of description, unless necessary, there is no distinction made between the determined soil compaction and yield effect and the weighed soil compaction and yield effect.

Additional data which may be used to predict or forecast soil compaction and yield effects of cultivation comprise:
- monitored harvesting quality or likely harvesting quality;
- monitored yield or likely yield;
- fertilizer- or slurry- or herbicide- or fungicide-, etc. content data or used type of seeds
- agronomical models such as defined by the following documents:
   https://www.umweltbundesamt.de/sites/default/files/medien/461/publikationen/4027. pdf; and
   https://www.lbeg.niedersachsen.de/download/61889/GeoBerichte 19.pdf

Predictions or forecast of soil compaction and yield effects may be based on one or more artificial intelligence model(s).

Indicators of soil compaction and yield effects which can be predicted or forecast may be relative or absolute or categorical soil compaction / yield effects or other soil compaction / yield effects of cultivation: (e.g. in percent, etc.) or soil compaction index (absolute or relative or categorical) and yield effects of cultivation index (absolute or relative or categorical) in comparison to the statistical absolute or relative or categorical soil compaction / yield effects of the machine or more machines.

The artificial intelligence model(s) for determining the soil compaction and yield effects may be before the determination of the soil compaction and yield effects trained with the above data (i.e. the data obtained by the data source 42 and/or stored in the database means 36).

The data for training this artificial intelligence model(s) may stem from the first agricultural plot of land 6 and/or the second agricultural plot of land 8 and/or the supplementary agricultural plot of land 10, or the particular area (e.g. any other plot of land that has similar properties and is not worked by this machine) or the machine(s) or implement(s).

In order to improve the prediction or forecast of machine characteristics between different machines and or different equipment, pre-trained artificial intelligence model(s) may be used.

Figure 3 shows schematically that the determined soil compaction and yield effects generated by means 60, and which may be weighed or not by the weighing function 88, is input in the means for determining a farming condition forecast 70.

### E: Efficiency and/or quality of Cultivation

Cultivation means all working steps in agriculture (plowing, seeding, harvesting, mowing, haying, spraying, etc.). Efficiency means how easily a job can or will be done, i.e. the ratio of the obtained result put in relation to the used resources. Quality means how good the job can or will be done overall.

As indicated in Figure 3, efficiency and quality of cultivation are determined by the computing environment 30. The computing environment 30 comprises a weighing function 90 allowing for the operator or the computing environment to adjust the relative importance of the efficiency and quality of cultivation with respect to the remaining cultivation parameters, by determining weighed efficiency and quality of cultivation.

The weighing function 90 may be 1, i.e. the weighed efficiency and quality of cultivation is the same as the efficiency and quality of cultivation input into the weighing function 90. Generally, the weighing function 90 is different from 1, i.e. the weighed efficiency and quality of cultivation is different from the efficiency and quality of cultivation input in the weighing function 90. For the sake of description, unless necessary, there is no distinction made between the determined efficiency and quality of cultivation and the weighed efficiency and quality of cultivation. The weighing function 90 could be implemented using a Pareto optimization Alternatively, the implementation may be any other mathematical, multi-objective or multi-modal optimization (such as Optimization algorithms, iterative methods, global convergence, heuristics).

Additional data which may be used, to predict efficiency and quality of cultivation:
- monitored or estimated harvesting quality
- monitored or estimated yield
- fertilizer- or slurry- or herbicide- or fungicide-, etc. content data type of seeds
- agronomical models, such as
   https://www.landtechnik-online.eu/ojs-2.4.5/index.php/landtechnik/article/view/2006-SH-306-308/3706
- seeding -> Temperature,
- spraying ->Temperature, rain, etc.;
- slurry -> rain, temperature, etc

Predictions or forecast of efficiency and quality of cultivation may be based on one or more artificial intelligence model(s).

Indicators of efficiency and quality of cultivation which can be predicted or forecast may be absolute or relative or categorical efficiency and / or quality of cultivation: (e.g. in percent, etc.) or an efficiency and/or quality of cultivation index (absolute or relative or categorical) in comparison to the statistical absolute or relative or categorical efficiency of cultivation of the machine or more machines.

The artificial intelligence model(s) for determining efficiency and quality of cultivation may be before the determination of the efficiency and quality of cultivation trained with the above data (i.e. the data obtained by the data source 42 and/or stored in the database means 36). The data for training this artificial intelligence model(s) may stem from the first agricultural plot of land 6 and/or the second agricultural plot of land 8 and/or the supplementary agricultural plot of land 10, or the particular area (e.g. any other plot of land that has similar properties and is not worked by this machine) or the machine(s) or implement(s).

In order to improve the prediction or forecast of efficiency and quality of cultivation between different machines and or different equipment, pre-trained artificial intelligence model(s) may be used. The different machines are two different individual machines, but of the same type (e.g. two beet harvesters) or two machines of different types (e.g. one plow and one beet root harvester).

Figure 3 shows schematically that the determined efficiency and quality of cultivation generated by means 60, and which may be weighed or not by the weighing function 88, is input in the means for determining a farming condition forecast 70.

### F: Cost prediction

If you can predict fuel consumption, wear, downtime, component failures and if you have the employee cost, the cost of spare parts, etc. you can calculate the cost per machine per hour, or the cost per machine per area, etc. If you include the path of driving from and to the field you can predict the cost of an agricultural cultivation task.

As indicated in Figure 3, cost is determined by the computing environment 30. The computing environment 30 comprises a weighing function 92 allowing for the operator or the computing environment to adjust the relative importance of the cost with respect to the remaining cultivation parameters, by determining weighed cost. The weighing function 90 may take into account the importance of monetary return for example compared to non-immediate monetary parameters, such as soil compaction or erosion.

The weighing function 92 may be 1, i.e. the weighed cost is the same as the cost input into the weighing function 92. Generally, the weighing function 92 is different from 1, i.e. the weighed cost is different from the cost input in the weighing function 92. For the sake of description, unless necessary, there is no distinction made between the determined cost and the weighed cost.. The weighing function 92 could be implemented using a Pareto optimization Alternatively, the implementation may be any other mathematical, multi-objective or multi-modal optimization (such as Optimization algorithms, iterative methods, global convergence, heuristics).

The computing environment 30 comprises also for each of the cultivation parameter A to F one switch means respectively 96, 98, 100, 102, 104, 106 adapted to determine whether the respective cultivation parameter is input into the means for determining a farming condition forecast 70 and thus taken into account in determining the combined forecast of farming conditions. Likewise, the computing environment 30 comprises also for the field passability P one switch means (not referenced) adapted to determine whether the field passability is input into the means for determining a farming condition forecast 70.

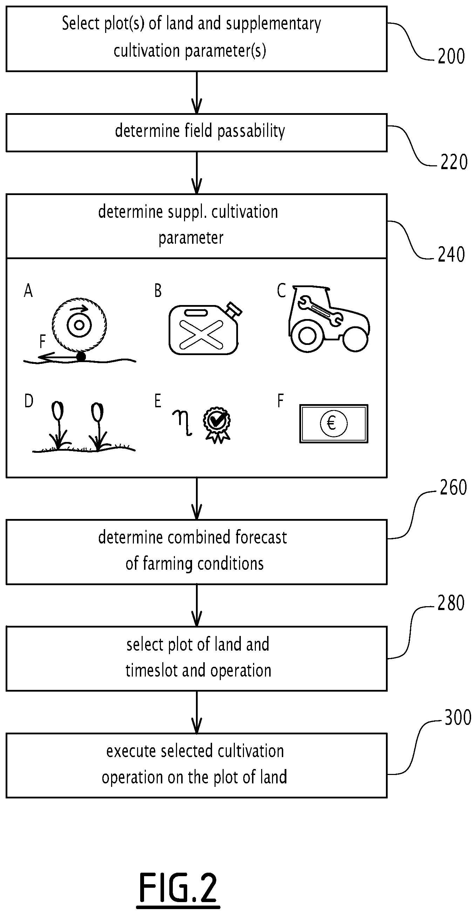

In Figure 2 is shown an example of a method executed during use of the computing environment according to the invention.

In a first step 200 the operator selects the plots of land for which the combined forecast of farming conditional should be established and the supplementary cultivation parameter(s) among the parameters A to F. For example, the plots of land 6 and 8 are selected and the supplementary plot of land 10 is not selected. Likewise, for example cultivation parameter D (soil compaction and yield) is selected and none of the other cultivation parameters A to C, E and F are selected.

The operator also selects the predetermined period of time for which the cultivating parameters are to be determined, for example the next week starting from the next working day (step not shown on Figure 2). This is achieved by the input means 50.

The operator could also select a specific operation to be executed and the method then determines the best time to execute this specific operation (e.g. harvesting, seeding).

Then, in a second step 220, the field passability is determined for the selected plots of land 6 and 8 over the predetermined period of time.

Then, in a third step 240, each of the selected supplementary cultivation parameter(s) is/are determined, for example the value or intensity of cultivation parameter D.

In a step 260 the computing environment 30 determines, based on the field passability P over the predetermined period of time and the chosen or selected supplementary cultivation parameter(s) A to F over the predetermined period of time, a combined forecast of farming conditions for each of the first 6 and second 8 plot of land over the predetermined period of time. The predetermined period of time may be determined by the operator or by the computing environment.

In a step 280, the computing environment 30 or the operator, based on the combined forecast of farming conditions, selects a selected plot of land, which is one of the first and second agricultural plot of land to be cultivated and selects a selected cultivation operation, which is one of a plurality of cultivation operations, for the selected plot of land.

Alternatively, a plurality of combined forecasts of farming conditions is established, each for one specific cultivation operation. The operator then might select one or more selected cultivation operations among the plurality of combined forecasts.

Subsequently in a step 300, in particular the operator executes the selected cultivation operation on the selected plot of land.

According to a particular embodiment of the method, the step of determining the field passability 220 may comprise one or more of the following sub-step(s):
- determining an amount or quote-part of agricultural operations executed or scheduled to be executed and corresponding to an external field passability, which is the field passability of at least one plot of land different from the first and second plot of land, and which may be the supplementary plot of land 10;
- providing one or more field passability artificial intelligence model(s) or on one or more statistical model(s).

The field passability artificial intelligence model may be provided with parameter data relating to the selected first 6 and the second 8 agricultural plots of land and with forecast data relating to the selected first and second agricultural plots of land over the predetermined period of time. The parameter data may be provided by the operator or determined by the algorithm.

The parameter data may be invariable data such as location, soil type, or the exposition to sun of the plots of land. The forecast data is variable data over the period of time such as rain forecast data or temperature forecast data. This applies to any of the forecast or parameter data in the present invention, including the machine parameters.

According to a particular embodiment of the method, the step of determining the field passability 220 may comprise the step of training the field passability artificial intelligence model with data, in particular actual data, relating to the field passability of a given plot of land. The given plot of land may be one or more of the selected plots of land, for example the first 6 and second plots 8 of land or another plot of land such as the supplementary plot of land 10.

In the present context, "actual data," is data that is based on or represents real-life objects and real-life conditions, such as data of an existing plot of land and physical data acquired relating to this plot of land. For a given plot of land, actual data may comprise temperature and humidity data of this plot of land for a given period of time and the associated crop yield obtained for crop growing on the plot of land during this period of time. With enough data, the artificial intelligence model may be trained in order to be able to determine future results based on a given set of data representing a current situation. This applies in an analogous manner to every method, method step or artificial intelligence model in the present disclosure.

According to a particular embodiment of the method, the step 240 of determining one or more supplementary cultivation parameters over the predetermined period of time comprises the step of determining tread characteristics of a machine to be used for the cultivation.

The step of determining the tread characteristics of a machine to be used for the cultivation may comprise:
- determining the machine to be used for the cultivation,
- determining tread characteristics, in particular tractive forces and/or wheel spin, based on the machine to be used for the cultivation.

According to a particular embodiment of the method, the step of determining tread characteristics comprises
providing a tread characteristics artificial intelligence model,
providing the tread characteristics artificial intelligence model with parameter data relating to the selected plots of land (e.g. the first and the second agricultural plots of land),
providing the tread characteristics artificial intelligence model with forecast data relating to the first and second agricultural plot of land over the predetermined period of time and
providing the tread characteristics artificial intelligence model with parameter data on the machine to be used for the cultivation.

The forecast data relating to the first and second agricultural plot of land may comprise for example rain forecast or temperature forecast, or any or all of the data obtained by the data source 42 and/or stored in the database means 36 as defined above.

The parameter data on the machine to be used for the cultivation may comprise the working depth of an implement of the machine.

According to a particular embodiment of the method, the step of determining tread characteristics comprises the step of training the tread characteristics artificial intelligence model with data, in particular actual data, relating to the tread characteristics of a given plot of land, for example the first 6 and or the second 8 plots of land and a given machine used for cultivating the given plot of land.

According to a particular embodiment of the method, the step of determining of one or more supplementary cultivation parameters over the predetermined period of time comprises (B:) determining fuel consumption of the machine to be used for the cultivation.

The step of determining fuel consumption comprises providing a fuel consumption artificial intelligence model,
providing the fuel consumption artificial intelligence model with parameter data relating to the first and the second agricultural plot of land,
providing the fuel consumption artificial intelligence model with forecast data relating to the first and second agricultural plot of land over the predetermined period of time and
providing the fuel consumption artificial intelligence model with parameter data on the machine to be used for the cultivation.

The forecast data relating to the first and second agricultural plot of land may comprise rain forecast or temperature forecast, or any or all of the data obtained by the data source 42 and/or stored in the database means 36 as defined above. The parameter data on the machine on the machine to be used may comprise historical data of the machine, of the machine type or predicted data of the machine or predicted data of the machine type.

The step of determining the fuel consumption may comprise the step of training the fuel consumption artificial intelligence model with data, in particular actual data, relating to the fuel consumption of a given machine for cultivation of a given plot of land and a given machine used for cultivating the given or selected plot(s) of land.

According to a particular embodiment of the method, the step of determining one or more supplementary cultivation parameters over the predetermined period of time comprises determining machine characteristics of the machine to be used for the cultivation.

The step of determining the machine characteristics may comprise:
- determining the machine to be used for the cultivation of the selected first 6 and/or second 8 plots of land, and
- determining the machine characteristics of the machine to be used for the cultivation.

The machine characteristics may comprise mechanical wear and/or downtime and/or component failures, and may comprise historical data of the machine, of the machine type or predicted data of the machine or predicted data of the machine type.

According to a particular embodiment of the method, the step of determining machine characteristics comprises
providing a machine characteristics artificial intelligence model,
providing the machine characteristics artificial intelligence model with parameter data relating to the first and the second agricultural plot of land,
providing the machine characteristics artificial intelligence model with forecast data relating to the first and second agricultural plot of land over the predetermined period of time and providing the machine characteristics artificial intelligence model with parameter data on the machine to be used for the cultivation.

The forecast data relating to the first and second agricultural plot of land may comprise rain forecast or temperature forecast data, or any or all of the data obtained by the data source 42 and/or stored in the database means 36 as defined above.

The step of determining the machine characteristics may comprise the step of training the machine characteristics artificial intelligence model with data, in particular actual data, relating to the machine characteristics of a given plot of land and a given machine used for cultivating the given plot of land.

According to a particular embodiment of the method, the step of determining one or more supplementary cultivation parameters over the predetermined period of time comprises determining (D:) Soil & Yield characteristics.

Determining Soil and Yield characteristics may comprise soil compaction and/or yield effects, of the respective agricultural plot of land, e.g. the first 6 and/or second 8 agricultural plot of land 8. Yield effects are effects that potentially influence the yield of a given plot of land.

Determining the Soil & Yield characteristics may comprise providing a Soil & Yield characteristics artificial intelligence model,
providing the Soil & Yield artificial intelligence model with parameter data relating to the first and the second agricultural plot of land, providing the Soil & Yield characteristics artificial intelligence model with forecast data relating to the first and second agricultural plot of land over the predetermined period of time and
providing the Soil & Yield characteristics artificial intelligence model with parameter data on the machine to be used for the cultivation.

In this context, the forecast data relating to the first and second agricultural plot of land may comprise rain forecast data, temperature forecast data, or any or all of the data obtained by the data source 42 and/or stored in the database means 36 as defined above.

The step of determining the Soil & Yield characteristics may comprise providing a Soil & Yield characteristics agronomical model,
providing the Soil & Yield agronomical model with parameter data relating to the first and the second agricultural plot of land,
providing the Soil & Yield characteristics agronomical model with forecast data relating to the first and second agricultural plot of land over the predetermined period of time and
providing the Soil & Yield characteristics agronomical model with parameter data on the machine to be used for the cultivation.

In this context, the forecast data relating to the first and second agricultural plot of land may comprise rain forecast or temperature forecast data. The forecast data may comprise some, any or all of the above disclosed data obtained by the data source 42 and/or stored in the database means 36.

The Soil & Yield characteristics agronomical model links input data to output data.

According to a particular embodiment of the method, the step of determining the Soil & Yield characteristics comprises the step of training the Soil & Yield characteristics artificial intelligence model with data, in particular actual data, relating to the Soil & Yield characteristics of a given plot of land and a given machine used for cultivating the given plot of land.

In the present case this may mean that the Soil & Yield characteristics artificial intelligence model is trained with data stemming from the first agricultural plot of land 6 and / or the second agricultural plot of land 8 or another plot of land. The Soil & Yield characteristics artificial intelligence model may also be trained with data stemming from the first machine 14, the second machine 16 and/or the third machine 18.

Alternatively or in addition, any of the artificial intelligence models for a given characteristic in the present invention may be trained with data stemming from any one of the other characteristics or parameter A/B/C/D/E/F. Therefore, for example the Soil & Yield characteristics artificial intelligence is trained with one or more of the above data relating to characteristics A/B/C//E/F.

According to a particular embodiment of the method, the step of determining one or more supplementary cultivation parameters over the predetermined period of time comprises determining (E:) Performance of Cultivation characteristics, in particular Efficiency and/or Quality of Cultivation, of the respective agricultural plot of land 6, 8.

The step of determining the Performance of Cultivation characteristics may comprise providing a Performance of Cultivation characteristics artificial intelligence model and providing the Performance of Cultivation characteristics intelligence model with parameter data relating to the first 6 and the second 8 agricultural plot of land.

The parameter data relating to the first and second agricultural plot of land may include the data obtained by the data source 42 and/or stored in the database means 36 as defined above.

The step of determining the Performance of Cultivation characteristics may comprise providing the Performance of Cultivation characteristics artificial intelligence model with forecast data relating to the first and second agricultural plot of land over the predetermined period of time and according to a specific embodiment also providing the Performance of Cultivation characteristics artificial intelligence model with parameter data on the machine to be used for the cultivation.

The forecast data relating to the first and second agricultural plot of land may comprise rain forecast or temperature forecast data the data obtained by the data source 42 and/or stored in the database means 36 as defined above.

The parameter data on the machine to be used for the cultivation may comprise the data obtained by the data source 42 and/or stored in the database means 36 as defined above.

The step of determining the Performance of Cultivation characteristics may comprise providing a Performance of Cultivation characteristics agronomical model, providing the Performance of Cultivation characteristics agronomical model with parameter data relating to the first and the second agricultural plot of land, providing the Performance of Cultivation characteristics agronomical model with forecast data relating to the first and second agricultural plot of land over the predetermined period of time and according to a specific embodiment also providing the Performance of Cultivation characteristics agronomical model with parameter data on the machine to be used for the cultivation,

The parameter data relating to the selected first 6 and the second 8 agricultural plots of land may comprise the data obtained by the data source 42 and/or stored in the database means 36 as defined above.

The forecast data relating to the first and second agricultural plot of land may comprise rain forecast or temperature forecast data and additionally the data obtained by the data source 42 and/or stored in the database means 36 as defined above.

The parameter data on the machine to be used for the cultivation may comprise the data obtained by the data source 42 and/or stored in the database means 36 as defined above.

The step of determining the Performance of Cultivation characteristics may comprise the step of training the Performance of Cultivation characteristics artificial intelligence model with data, in particular actual data, relating to the machine characteristics of a given plot of land and a given machine used for cultivating the given plot of land.

In the present case, this may include training the artificial intelligence model with data, in particular actual data, relating to the behavior of one or several of the first machine 14, the second machine 16 and the third machine 18 in the the first 6 and/or second 8 plots of land based on previous cultivation operations.

The step of determining one or more supplementary cultivation parameters over the predetermined period of time comprises determining (F:) the cost of cultivation of the respective agricultural plot of land.

The artificial intelligence models that may be used for one, some or all of the above artificial intelligence models include the following.

Preferably, the artificial intelligence models is one or more out of the group consisting of Deep Learning techniques (I.), Artificial Neural nets (II.), Machine learning techniques (III.), Anomaly detection techniques (IV.) and Dimensionality reduction techniques (V.).
I. Deep learning techniques, which may include:
   - Deep Convolutional neural networks
   - Deep Recurrent neural networks
   - Hierarchical temporal memory
   - Deep Boltzmann Machine (DBM)
   - Deep feedforward neural networks.
II. Artificial Neural nets, which may include:
   - Autoencoder
   - Multilayer perceptron
   - RNN (LSTM, GRU)
   - Extreme learning machine
   - Restricted Boltzmann machine
   - Convolutional neural network (CNN / U-Net).
III. Machine learning techniques, which may include:
   - Instance-based algorithm techniques, which may include:
      ▪ K-nearest neighbors algorithm (KNN)
      ▪ Learning vector quantization (LVQ)
      ▪ Self-organizing map (SOM)
   - Regression analysis techniques, which may include:
      ▪ Logistic regression
      ▪ Linear regression
      ▪ Multivariate adaptive regression splines (MARS)
      ▪ Support vector machine
   - Regularization algorithm techniques, which may include:
      ▪ Ridge regression
      ▪ Least Absolute Shrinkage and Selection Operator (LASSO)
      ▪ Elastic net
      ▪ Least-angle regression (LARS)
   - Classifiers techniques which may include:
      ▪ Probabilistic classifier techniques, which may include:
         - Naive Bayes classifier
      ▪ Linear classifier
      ▪ Hierarchical classifier.
IV. Anomaly detection techniques, which may include:
   - k-nearest neighbors classification (k-NN)
   - Local outlier factor.
V. Dimensionality reduction techniques, which may include:
   - Canonical correlation analysis (CCA)
   - Factor analysis
   - Multidimensional scaling (MDS)
   - Partial least squares regression (PLSR)
   - Principal component analysis (PCA)
   - t-distributed stochastic neighbor embedding (t-SNE).
VI. Ensemble learning techniques, which may include:
   - AdaBoost
   - Bayes optimal classifier
   - Bayesian parameter averaging
   - Bayesian model combination
   - Boosting
   - Bootstrap aggregating (Bagging)
   - Random Forest
   - Stacked Generalization (blending).
VII. Other Supervised learning techniques, which may include:
   - Gaussian process regression
   - Group method of data handling (GMDH)
   - Hidden Markov models techniques which may include but are not limited to:
      ▪ Hierarchical hidden Markov model
   - Relevance Vector Machine (RVM).
VIII. Other Semi-supervised learning techniques, which may include:
   - Transductiv support vector machine
X. Bayesian statistics techniques, which may include:
   - Naive Bayes
   - Gaussian Naive Bayes
   - Bayesian Belief Network (BBN)
XI. Decision tree algorithm techniques, which may include:
   - Decision tree
   - Classification and regression tree (CART)
   - Iterative Dichotomiser 3 (ID3)
   - C4.5 algorithm
   - C5.0 algorithm
   - Chi-squared Automatic Interaction Detection (CHAID)
   - Decision stump
   - SLIQ
XV. Cluster analysis techniques, which may include:
   - BIRCH
   - DBSCAN
   - Expectation-maximization (EM)
   - Fuzzy clustering
   - Hierarchical Clustering
   - K-means clustering
   - K-medians
   - Mean-shift
   - OPTICS algorithm.
XVI. Representation learning techniques, which may include:
   - Supervised dictionary learning
   - Principal component analysis
   - Local linear embedding
   - Unsupervised dictionary learning.
XVIII. Other machine learning methods and problems and techniques, which may include:
   - Feature engineering
      ▪ Inputation
      ▪ handling outliers
      ▪ binning
      ▪ log transform
      ▪ one-hot encoding
      ▪ grouping operations
      ▪ features split
      ▪ scaling
      ▪ extracting date
   - Online machine learning

### Features of the disclosed system and method

One aspect of the above features is to merge at least some of the information available for plots of land and/or machinery and to establish a combined forecast of time of advantageous farming conditions.

Which information should be merged may be the decision of the user, the algorithm or the program.

The system implementation does not need to be able to determine all of the supplementary cultivation parameters. The system can comprise different modules, so that the system only implements a portion of the above system, e.g. is able to determine wear and fuel consumption prediction and a task optimization, but not tread characteristics forecast.

The operator may choose a strategy, e.g. Time pressure vs. Wear vs. Fuel consumption vs. Cultivation Quality by giving each of the selected parameters a specific weight.

With the above predictions of advantageous farming conditions and with the weights given by the operator, i.e. the farmer or contractor, the information can be merged and possible advantageous farming conditions or working timeslots can be determined over time.

The determination of possible working timeslots can also be based by subjecting the data to a Pareto optimization or some other mathematical, multi-objective or multi-modal optimization, such as an optimization algorithm, iterative method, global convergence, heuristics. Based on the optimization result a list with possible or advantageous task order of chosen or all tasks may be provided.

Based on the forecast of wear and fuel consumption, a forecast of the total cost of one working hour or of operation of one plot of land may be determined as a function of the driver cost, the machine prices, the spare parts prices, etc.

Alternatively or additionally the potential cost of downtime may be determined, based on whether a given maintenance operation is not accomplished within a given timeframe. Still alternatively or additionally, the likely next downtime of one of the machines and/or its downtime reason, as well as the likely associated repair cost and repair time may be determined based on the available data.

The forecasts of the individual cultivation parameters may be displayed by the system 30 over time for the predetermined period of time.

Additionally, the combined forecast can be displayed by the system 30 over time for the predetermined period of time, for example for a whole season, for a certain timeslot for at least one user defined timeslot, etc. The period of time of the combined forecast which is displayed can be predetermined by the operator or the program.

The forecasts of the individual cultivation parameters may be visualized on a 2D or 3D map and the combined forecast may be plotted on a 2D or 3D map, for example for a whole season, for a certain timeslot, for at least one user defined timeslot, etc.. Also, historical data could be visualized. The defined timeslot can also be a single date, i.e. a 24h or 8h timeslot.

After the farmer/contractor/operator has executed the selected cultivation operation on the plot of land the conditions under which the machine was working may be displayed or saved. This would give the operator the possibility to perform some extended documentation. In case of a contractor, he could prove that he did a good job, the contractor's customers could see that the work was good or bad.

Possibilities for visualization are for example in farm management systems, mobile device apps, web apps, computer applications, videos, one or more machine displays of the agricultural machine or the agricultural implement, web portals and platforms, etc.. It could also be interesting to provide APIs (Application Programming Interface).

The strategies (e.g. Time pressure vs. Wear vs. Fuel consumption vs. Cultivation Quality vs. etc.) of the different users over the world, in a specific area, in the neighborhood, may be displayed via a statistic or visualization to the operator.

In case a parameter in the present disclosure is stated in a categorical manner, it is stated in discrete values which comprise or consist of a determined number of values, for example of 3 to 5 values. In this case the categorical values may be: 1-bad; 5-average; 10-good.

### Benefits of the invention

The main benefit of this invention is a central point for a contractor, a farmer or other operator to find historic, current and likely future environmental conditions for working on agricultural plots of land.

Because of different soil types and different former weather conditions, etc., the predictions of the disclosed system and method may have a resolution of one acre or less, i.e. the determined forecast may be different from acre to acre. This gives the operator the possibility to plan tasks under new aspects. With this new knowledge it is for example possible to safe fuel, optimize in terms of mechanical wear or cultivation quality, or - if there is time pressure - to harvest at first fields with a higher passability, etc..

Other advantageous points of the disclosed system and method are that the operator can choose a strategy and find advantageous farming conditions or timeslots among several fields or for a single field. He may also get a calculation or forecast of expected cost (e.g. harvesting cost, maintenance cost, downtime cost). He may see what strategy other operators use for similar conditions. He may also visualize, save and/or export future, current and historic environmental conditions for one or more of the agricultural plots of land.

The disclosed system and method gives a new possibility to task planning (strategies, different predictions, cost calculation, etc.), optimization of task order and tasks, documentation and its visualization.

## Claims

1. Method of cultivation of at least a first (6) and a second (8) agricultural plot of land, the method comprising the steps, in particular successive steps:
- determining for each of the first and the second agricultural plot of land a field passability (P), which is a cultivation parameter, over a predetermined period of time (T), the period of time being at least partially in the future,
- determining for each of the first and second agricultural plot of land one or more supplementary cultivation parameter over the predetermined period of time (T),
- the supplementary cultivation parameter being selected out of the group consisting of:
- Tread characteristics (A), including tractive forces and/or wheel spin, of a machine to be used for the cultivation,
- Fuel consumption (B) of the machine to be used for the cultivation,
- Machine characteristics (C), including mechanical wear and/or downtime and/or component failures, of the machine to be used for the cultivation,
- Soil & Yield characteristics (D), including soil compaction and /or yield effects, of the respective agricultural lot of land,
- Efficiency and / or Quality of Cultivation (E),
- Cost (F),
- determining, based on the field passability (P) and the supplementary cultivation parameter (A - F), a combined forecast of farming conditions (FC) for each of the first and second plot of land over the predetermined period of time,
- based on the combined forecast of farming conditions,
selecting a selected plot of land, which is one of the first and second agricultural plot of land to be cultivated and
selecting a selected cultivation operation, which is one of a plurality of cultivations operations, for the selected plot of land,
executing the selected cultivation operation on the selected plot of land.

2. Method of cultivation according to claim 1, wherein the step of determining the field passability comprises one or more of:
- determining an amount or quote-part of agricultural operations executed or scheduled to be executed and corresponding to an external field passability, which is the field passability of at least one plot of land different from the first and second plots of land,
- providing a field passability artificial intelligence model, providing the field passability artificial intelligence model with parameter data relating to the first and the second agricultural plot of land, providing the field passability artificial intelligence model with forecast data relating to the first and second agricultural plot of land over the predetermined period of time

3. Method of cultivation according to claim 2, wherein the step of determining the field passability comprises the step of training the field passability artificial intelligence model with actual data relating to the field passability of a given plot of land.

4. Method of cultivation according to any one of the previous claims, wherein
the step of determining of one or more supplementary cultivation parameters over the predetermined period of time comprises determining tread characteristics (A:) (tractive forces and/or wheel spin), of a machine to be used for the cultivation, wherein
determining tread characteristics of a machine to be used for the cultivation comprises :
- determining the machine (12) to be used for the cultivation,
- determining tread characteristics (A), in particular tractive forces and/or wheel spin, based on the machine to be used for the cultivation.

5. Method of cultivation according to any one of the previous claims, wherein the step of determining tread characteristics comprises providing a tread characteristics artificial intelligence model, providing the tread characteristics artificial intelligence model with parameter data relating to the first and the second agricultural plot of land, providing the tread characteristics artificial intelligence model with forecast data relating to the first and second agricultural plot of land over the predetermined period of time and providing the tread characteristics artificial intelligence model with data or parameter data on the machine to be used for the cultivation.

6. Method of cultivation according to claim 5, wherein the step of determining the tread characteristics comprises the step of training the tread characteristics artificial intelligence model with data, in particular actual data, relating to the tread characteristics of a given plot of land and a given machine used for cultivating the given plot of land.

7. Method of cultivation according to any one of the previous claims, wherein
the step of determining of one or more supplementary cultivation parameters over the predetermined period of time comprises determining fuel consumption (B) of the machine to be used for the cultivation, wherein
the step of determining fuel consumption comprises providing a fuel consumption artificial intelligence model, providing the fuel consumption artificial intelligence model with parameter data relating to the first and the second agricultural plot of land, providing the fuel consumption artificial intelligence model with forecast data relating to the first and second agricultural plot of land over the predetermined period of time and providing the fuel consumption artificial intelligence model with data on the machine to be used for the cultivation.

8. Method of cultivation according to claim 7, wherein the step of determining the fuel consumption comprises the step of training the fuel consumption artificial intelligence model with data, in particular actual data, relating to the fuel consumption of a given machine for cultivation of a given plot of land and a given machine used for cultivating the given plot of land.

9. Method of cultivation according to any one of the previous claims, wherein the step of determining one or more supplementary cultivation parameters over the predetermined period of time comprises determining machine characteristics (C:) of the machine to be used for the cultivation, wherein
determining the machine characteristics comprises :
- determining the machine to be used for the cultivation,
- determining the machine characteristics, in particular mechanical wear and/or downtime and/or component failures, of the machine to be used for the cultivation.

10. Method of cultivation according to claim 9, wherein
the step of determining machine characteristics comprises providing a machine characteristics artificial intelligence model, providing the machine characteristics artificial intelligence model with parameter data relating to the first and the second agricultural plot of land, providing the machine characteristics artificial intelligence model with forecast data relating to the first and second agricultural plot of land over the predetermined period of time and providing the machine characteristics artificial intelligence model with data on the machine to be used for the cultivation.

11. Method of cultivation according to claim 10, wherein the step of determining the machine characteristics comprises the step of training the machine characteristics artificial intelligence model with data, in particular actual data, relating to the machine characteristics of a given plot of land and a given machine used for cultivating the given plot of land.

12. Method of cultivation according to any one of the previous claims, wherein the step of determining one or more supplementary cultivation parameters over the predetermined period of time comprises determining Soil & Yield characteristics (D), including soil compaction and /or yield effects, of the respective agricultural plot of land, wherein
determining the Soil & Yield characteristics comprises one of the following:
- providing a Soil & Yield characteristics artificial intelligence model, providing the Soil & Yield artificial intelligence model with parameter data relating to the first and the second agricultural plot of land, providing the Soil & Yield characteristics artificial intelligence model with forecast data relating to the first and second agricultural plot of land over the predetermined period of time and providing the Soil & Yield characteristics artificial intelligence model with parameter data on the machine to be used for the cultivation,
- providing a Soil & Yield characteristics agronomical model, providing the Soil & Yield agronomical model with parameter data relating to the first and the second agricultural plot of land, providing the Soil & Yield characteristics agronomical model with forecast data relating to the first and second agricultural plot of land over the predetermined period of time and providing the Soil & Yield characteristics agronomical model with parameter data on the machine to be used for the cultivation,

13. Method of cultivation according to claim 12, wherein the step of determining the Soil & Yield characteristics comprises the step of training the Soil & Yield characteristics artificial intelligence model with data, in particular actual data, relating to the Soil & Yield characteristics of a given plot of land and a given machine used for cultivating the given plot of land.

14. Method of cultivation according to any one of the previous claims, wherein the step of determining one or more supplementary cultivation parameters over the predetermined period of time comprises determining Performance of Cultivation characteristics (E), in particular Efficiency and/or Quality of Cultivation, of the respective agricultural plot of land, wherein
determining the Performance of Cultivation characteristics comprises one of the following:
- providing a Performance of Cultivation characteristics artificial intelligence model, providing the Performance of Cultivation characteristics intelligence model with parameter data relating to the first and the second agricultural plot of land, providing the Performance of Cultivation characteristics artificial intelligence model with forecast data relating to the first and second agricultural plot of land over the predetermined period of time and in particular providing the Performance of Cultivation characteristics artificial intelligence model with data on the machine to be used for the cultivation,
- providing a Performance of Cultivation characteristics agronomical model, providing the Performance of Cultivation characteristics agronomical model with parameter data relating to the first and the second agricultural plot of land, providing the Performance of Cultivation characteristics agronomical model with forecast data relating to the first and second agricultural plot of land over the predetermined period of time and in particular providing the Performance of Cultivation characteristics agronomical model with data on the machine to be used for the cultivation,

15. Method of cultivation according to claim 14, wherein the step of determining the Performance of Cultivation characteristics comprises the step of training the Performance of Cultivation characteristics artificial intelligence model with actual data relating to the performance of cultivation characteristics of a given plot of land and a given machine used for cultivating the given plot of land.

16. Method of cultivation according to any one of the previous claims, wherein the step of determining one or more supplementary cultivation parameters over the predetermined period of time comprises determining the cost of cultivation (F) of the respective agricultural plot of land.

17. A system of cultivation of at least a first and a second agricultural plot of land, comprising:
a computing environment including at least one computer-readable storage medium having program instructions stored therein, and
a computer processor operable to execute the program instructions of determining according to one of the methods of any one of the previous claims, and
a machine adapted to execute the selected cultivation operation on the selected plot of land.
